# EUROPEAN PATENT APPLICATION

(11) **EP 4 778 774 A1**
(43) Date of publication of application: **22.07.2026**
(21) Application number: 23952350.9
(22) Date of filing: 15.09.2023
(51) Int. Cl.: B60L 53/35, B60L 53/66, B60L 53/67, H02J 7/00

(54) **ROBOT CHARGING STATION**

(71) Applicant: Bear Robotics Korea, Inc., Seoul 04779 (KR)
(72) Inventor: LEE, Haklim, Seoul 06772 (KR); CHEON, Jeeyoung, Seoul 06772 (KR)
(74) Representative: Murgitroyd & Company
(86) International application number: PCT/KR2023/013940
(87) International publication number: WO 2025/058110

(57) **Abstract**

This robot charging station comprising: a base case which is fixed to a floor surface and which includes an entry ramp at the perimeter thereof; a rotary case which is rotatably coupled to the upper portion of the base case and which includes a plurality of charging sites partitioned at a first angle; a plurality of charging boxes provided at each charging site of the rotary case; a driving part for rotating the rotary case; and a control part for controlling the driving part such that the first charging site from among the plurality of charging sites of the rotary case faces the entry ramp, the robot charging station enabling chargers for logistic robots to be provided at a corner, and providing a unified entry route to the plurality of chargers so that a space for an entry part can be reduced.

## Description

### [Technical Field]

The present disclosure relates to a charging station of a logistics robot used in a logistics site.

### [Background]

In order to take charge of a portion of factory automation, the robot has been developed for industry. Recently, an application of a robot has been further expanded, and a robot that may be used in daily life as well as a medical robot and an aerospace robot has been developed.

Among industrial robots, a robot that performs a precise assembly operation repeatedly performs the same operation and repeats the same operation without an unexpected situation at a predetermined position, so that automation using the robot has been preceded.

However, the transportation and charging domain - which includes driving, a charging domain where robots should make judgments about unexpected situations - has not yet seen active commercialization of robots. That said, the number of driving robots is on the rise, as sensor performance for perceiving the surrounding environment has improved significantly in recent years, and computing power capable of rapidly processing and responding to recognized information has advanced considerably.

Industrially, robots tasked with transportation functions are drawing significant attention, and competition in this sector is intensifying day by day. In logistics facilities, dozens of robots are operated simultaneously, and when factoring in charging time and operating time, approximately one charger is required for every three robots. Chargers are generally installed flush against walls, and as the number of chargers increases, they are arranged in a single row along one wall of the logistics center, occupying a considerable amount of space.

Not only should space be secured for charger installation, but a clear front-access area should also be ensured to allow robots to approach and dock with the chargers. However, it is difficult to secure sufficient space for this purpose in existing logistics facilities.

### [Summary]

### [Technical Purpose]

A purpose of the present disclosure is to provide a robot charging station that enables chargers for logistics robots to be installed in corners, and that reduces the space required for robot approach by consolidating the entry routes of multiple chargers into a single unified access path.

### [Technical Solutions]

Provided is a robot charging station comprising: a base casing fixed to a floor surface and including an entry ramp at an outer periphery; a rotatable casing rotatably coupled to a top of the base casing and including a plurality of charging areas partitioned from each other, each area defining a first angle; a plurality of charging boxes respectively installed on the plurality of charging areas of the rotatable casing; and a driver for rotating the rotatable casing; and a controller configured to control the driver such that a first charging area among the plurality of charging areas of the rotatable casing faces the entry ramp.

The base casing may include a base core disposed at a center thereof and protruding upwardly, wherein the driver may comprise: a ring gear formed along an outer periphery of the base core; and a motor fixed to the rotatable casing and engaged with one side of the ring gear to provide a rotational force thereof.

The base casing may include a base core disposed at a center thereof and protruding upwards, wherein the rotatable casing may include an outer core surrounding an outer surface of the base core, and wherein the charging boxes may be arranged along the outer core such that each of charging boxes defines the first angle.

The rotatable casing may include a plurality of partitions extending from the outer core and arranged to be spaced from each other by an angular spacing of the first angle, and wherein each of the charging boxes may be disposed between adjacent ones of the partitions.

The robot charging station may comprise: a power cable connected to the base core; a connector ring in contact with the power cable and surrounding an outer periphery of the base core; a metal bridge connecting the connector ring and the outer core; and a charging cable connecting the metal bridge and the charging box to each other.

The driver may rotate the rotatable casing by an angle corresponding to an n-multiple of the first angle.

The robot charging station may comprise: a plurality of fixed magnets disposed in the base casing and arranged to be spaced from each other by an angular spacing of the first angle; and a rotation sensor disposed in the rotatable casing to detect the fixed magnets, wherein in response to that the rotation sensor detects the fixed magnet, the controller may be configured to control the driver to stop rotation of the rotatable casing.

The robot charging station may comprise: a pair of direction sensors respectively located on left and right sides of the rotation sensor and configured to detect the fixed magnets, wherein the controller may be configured to determine a rotation direction of the rotatable casing based on the direction sensor that detected the fixed magnet among the pair of direction sensors.

The rotation sensor may include a Hall IC or an optical sensor.

The controller may be configured to: monitor a charging state of a robot connected to a charging port of the charging box, and designate, as the first charging area, one of the charging areas on which a robot on which charging is nearly completed is located or one of empty charging areas.

The entry ramp may have a width corresponding to a width of an outermost edge of each of the partitioned charging areas of the rotatable casing.

The entry ramp may extend along an outer periphery of the base casing so as to have a width greater than a width of an outermost edge of each of the partitioned charging areas of the rotatable casing, wherein the controller may be configured to control the driver such that the first charging area may be positioned at a position corresponding to a portion of the entry ramp that does not face a wall surface or an obstacle.

The robot charging station may further comprise an indicator displaying a charging level of the robot.

The robot charging station may comprise: a bearing positioned between an upper surface of the base casing and a lower surface of the rotatable casing, wherein the bearings may be arranged to be spaced apart from each other by an angular spacing of a second angle as 1/2 of the first angle.

The robot charging station may comprise: a seating groove located in front of each of the charging boxes of the rotatable casing, wherein a wheel of the robot may be caught in the groove.

### [Advantageous Effects]

The robot charging station of the present disclosure enables the charger for logistics robots to be installed in the corner, and reduces the space required for robot approach by consolidating the entry routes of the plurality of chargers into a single unified access path.

The spatial inefficiency associated with charging may be improved to eliminate the hurdle to introducing logistics robots imposed by space constraints.

Effects obtainable from the present embodiments are not limited by the above mentioned effects, and other unmentioned effects may be clearly understood from the above description by those having ordinary skill in the technical field to which the present disclosure pertains.

### [Brief Description of Drawings]

FIG. 1 is a view illustrating an example of use of a robot charging station according to an embodiment of the present disclosure.
FIG. 2 is a perspective view illustrating a robot charging station according to an embodiment of the present disclosure.
FIG. 3 is a perspective view illustrating another embodiment of an entry ramp of the robot charging station of the present disclosure.
FIG. 4 is a cross-sectional view taken along a line A-A of FIG. 2.
FIG. 5 is a plan view illustrating a robot charging station according to an embodiment of the present disclosure.
FIG. 6 is a perspective view illustrating a base casing of a robot charging station according to an embodiment of the present disclosure.
FIG. 7 is a graph illustrating an example of battery states of robots chargeable by the robot charging station of the present disclosure.

### [Best Mode]

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element may be directly connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

A robot is a machine device capable of automatically performing a certain task or operation. The robot may be controlled by an external control device or may be embedded in the control device. The robot may perform tasks that are difficult for humans to perform, such as repeatedly processing only a preset operation, lifting a heavy object, performing precise tasks or a hard task in extreme environments.

In order to perform such tasks, the robot includes a driver such as an actuator or a motor, so that the robot may perform various physical operations, such as moving a robot joint.

Industrial robots or medical robots having a specialized appearance for specific tasks due to problems such as high manufacturing costs and dexterity of robot manipulation were the first to be developed.

Whereas industrial and medical robots are configured to repeatedly perform the same operation in a designated place, mobile robots have recently been developed and introduced to the market. Robots for use in the aerospace industry may perform exploration tasks or the like on distant planets that are difficult for humans to directly go to, and such robots have a driving function.

In order to perform the driving function, the robot has a driver, wheel(s), a frame, a brake, a caster, a motor, etc. In order for the robot to recognize the presence or absence of surrounding obstacles and move while avoiding the surrounding obstacles, an evolved robot equipped with artificial intelligence has recently been developed.

Artificial intelligence refers to a technical field for researching artificial intelligence or a methodology for implementing the artificial intelligence. Machine learning refers to a technical field for defining various problems handled in the artificial intelligence field and for researching methodologies required for addressing such problems. Machine learning is also defined as an algorithm that improves performance of a certain task through continuous experience.

In order to perform autonomous driving, the movable object such as the robot may include a large number of sensors to recognize data of the surrounding situation. For example, the sensors may include a proximity sensor, an illumination sensor, an acceleration sensor, a magnetic sensor, a gyro sensor, an inertial sensor, an RGB sensor, an infrared (IR) sensor, a fingerprint recognition sensor, an ultrasonic sensor, an optical sensor, a microphone, a lidar, a radar, and the like.

The robot may perform autonomous driving not only based on information collected by sensors, but also based on image information collected by an RGBC camera and an infrared (IR) camera and sound information collected through a microphone. In addition, the robot may travel based on information received through a user input unit. Map data, location information, and information about peripheral situations may be collected through a wireless communication unit. The collected information is requisite for autonomous driving.

Map data may include object identification information for various objects disposed in a space where the robot moves. For example, the map data may include object identification information for fixed objects such as a wall and a door, and other object identification information for movable objects such as a flowerpot and a desk. In addition, the object identification information may include a name, a type, a distance, a location, etc.

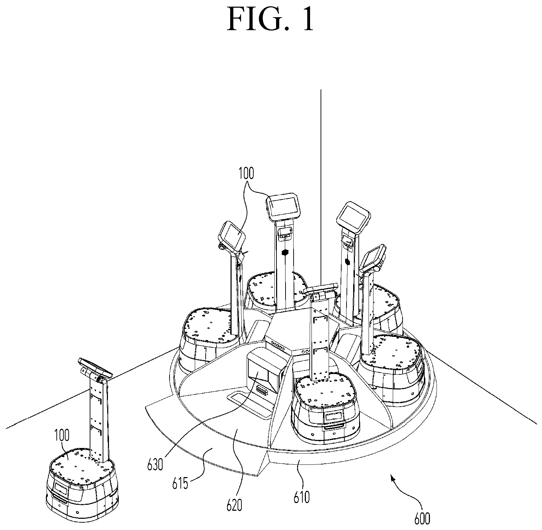

FIG. 1 is a view illustrating an example of use of a robot charging station 600 according to an embodiment of the present disclosure. The robot charging station 600 of the present disclosure is an apparatus for charging autonomously navigable robots and is characterized in that it is capable of charging a plurality of robots simultaneously.

In logistics facilities, dozens of robots are operated simultaneously, and when factoring in charging time and operating time, approximately one charger is required for every three robots. Chargers are generally installed flush against walls, and as the number of chargers increases, they are arranged in a single row along one wall of the logistics center, occupying a considerable amount of space.

Not only should space be secured for charger installation, but a clear front-access area should also be ensured to allow robots to approach and dock with the chargers. However, it is difficult to secure sufficient space for this purpose in existing logistics facilities.

In consideration of these circumstances, the robot charging station 600 of the present disclosure is characterized in that it is capable of simultaneously charging a plurality of robots while being installable in a corner as illustrated in FIG. 1. Since the entry path may be formed at one side, the space that should be left vacant in front of the charging station 600 for robot entry may also be reduced.

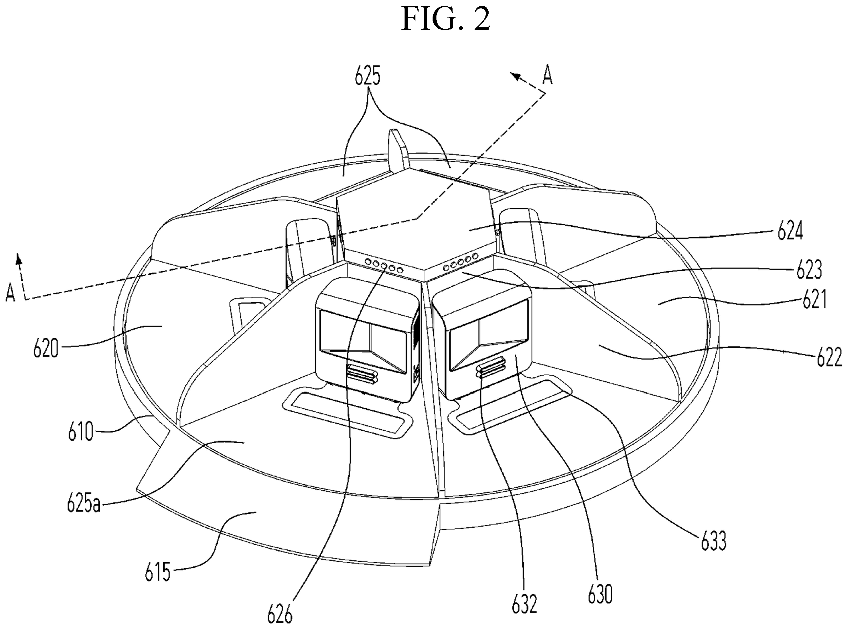

FIG. 2 is a perspective view illustrating a robot charging station 600 according to an embodiment of the present disclosure.

The robot charging station 600 of the present disclosure comprises a base casing 610 fixed to a floor surface and including an entry ramp 615 on one side thereof, and a rotatable casing 620 rotatably coupled to a top of the base casing 610.

Since the rotatable casing 620 of the present disclosure rotates while being disposed on the base casing 610, each of the base casing 610 and the rotatable casing 620 may have a disk shape. The base casing 610 may include a base plate 611 seated on the floor surface and a base rim 612 located at an outer periphery thereof.

The base rim 612 surrounds an outer periphery of the rotatable casing 620 and has a height corresponding to a thickness of the rotating plate 621, which is the bottom surface of the rotatable casing 620. An upper surface of the base rim 612 and an upper surface of the rotating plate 621 may have the same vertical level.

The rotatable casing 620 may be partitioned into a plurality of charging areas 625 so that a plurality of robots 100 may be respectively seated thereon. Each charging area 625 may have a fan-shaped form having a first angle, and the sizes of the charging areas 625 may be sized to be equal to each other. In the present embodiment, the rotatable casing is partitioned into six charging areas 625, and a central angle (first angle) of each charging area 625 is 60 degrees.

At the center of each charging area 625, there is a charging box 630 including a charging port connectable to a charging terminal of a robot. The charging areas 625 may be partitioned from each other using partitions 622, and the partitions 622 serve to guide the robot to enter the charging box 630 while simultaneously supporting the robot when the rotatable casing 620 rotates.

Each of the number of charging boxes 630 and the number of partitions 622 correspond to the number of partitioned charging areas 625. In the present embodiment, six charging boxes 630 and six partitions 622 may be provided. The plurality of charging boxes 630 are arranged around the center of the rotatable casing 620 and each of the plurality of charging boxes 630 extends by a first angle in the circumferential manner and the partitions 622 may also be arranged to be space from each other by the first angle in the circumferential manner.

The charging box 630 has a charging port 632 at a vertical level corresponding to the vertical level of the charging terminal of the robot, and the robot may move using a front camera, lidar, or the like such that the charging port 632 of the charging box 630 and the charging terminal of the robot are coupled to each other.

A seating groove 633 may be provided in front of the charging box 630 so that the wheel of the robot may be fixedly received therein. The seating groove 633 may prevent the robot from sliding on the rotating plate 621 when the rotatable casing 620 rotates.

The entry ramp 615 is located along an outer periphery of the base casing 610 and extends from the floor surface to an upper surface of the base rim 612. Since the upper surface of the base rim 612 is coplanar with the upper surface of the rotatable casing 620, a robot that has moved along the entry ramp 615 may move onto the upper surface of the base casing 610.

The robot charging station may include a controller (not shown) that controls a driver 640 and monitors the charging box 630. The controller may be located inside the robot charging station 100 as illustrated in FIG. 2, or may also control the robot charging station 600 in consideration of the charging level of each robot 100 in a robot control system that controls all robots 100 in the logistics facility.

The controller may control the driver to rotate the rotatable casing 620 such that a first charging area 625a among the charging areas 625 of the rotatable casing 620 is connected to the entry ramp 615. The first charging area 625a may be an empty charging area in which no robot is located, or a charging area in which a robot 100 on which the charging has been completed is located. The controller may designate the first charging area 625a based on the monitoring result of the current flow in the charging box 630.

When the controller designates an empty charging area as the first charging area 625a and controls the driver to rotate the first charging area 625a to be connected to the entry ramp 615, the robot 100 in need of charging may move along the entry ramp 615 to the first charging area 625a. In order to allow a fully charged robot to depart from the first charging area 625a through the entry ramp 615, the controller designates the charging area 625 in which the nearly fully charged robot is located as the first charging area 625a and rotates the rotatable casing 620 such that the first charging area 625a is connected to the entry ramp 615.

The entry ramp 615 of the robot charging station 600 of the embodiment illustrated in FIGS. 1 and 2 may have a width corresponding to the size of the outermost edge of the partitioned charging area 625 of the rotatable casing 620. The entry ramp 615 is positioned such that the inclined surface of the entry ramp does not face the wall surfaces or obstacles as illustrated in FIG. 1, so that a robot 100 may climb onto the rotating plate 621 of the rotatable casing 610 through the entry ramp 615.

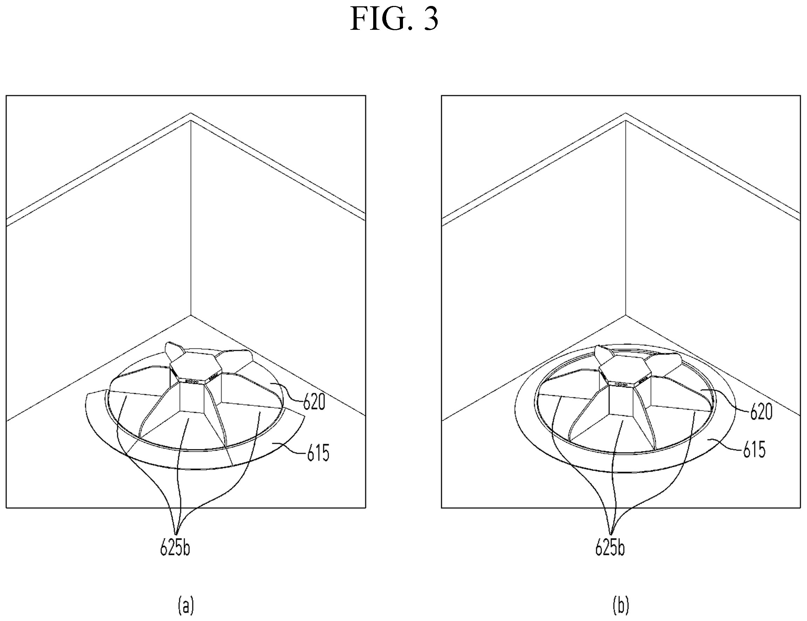

FIG. 3 illustrates another embodiment of the entry ramp 615 of the robot charging station 600 of the present disclosure, in which the entry ramp 615 may have a size greater than or equal to the width of one charging area 625. As shown in (a) in FIG. 3, the entry ramp 615 is not positioned in an area in which the entry of the robot into the ramp is interfered from a wall surface or an obstacle, and the entry ramp 615 extends along a plurality of charging areas 625 such that the entry of the robot into the ramp is interfered from a wall surface or an obstacle and thus the size of the entry ramp 615 may be sized to be larger.

When the robot charging station 600 is positioned in a corner as shown in (a) of FIG. 3, the entry ramp 615 connected to charging areas 625b arranged in a range of approximately 180 degrees (three charging areas 625b in the present embodiment) may be provided. The entry ramp 615 of the present embodiment may be separated into areas corresponding to the widths of the partitioned charging areas 625, and each of the divided areas of the entry ramp 615 may be selectively mounted on or removed from the outer periphery of the base casing 610.

Referring to (b) of FIG. 3, the entry ramp 615 of the robot charging station 600 of the present embodiment may be formed in a ring shape along the outer periphery of the base casing 610. The portion of the entry ramp 615 facing a wall surface or an obstacle cannot be passed through by a robot.

The controller may distinguish the portion of the entry ramp 615 that the robot cannot enter and the portion of the entry ramp 615 that the robot can enter from each other, and may control the driver to rotate the rotatable casing 620 such that the portion of the entry ramp 615 that the robot can enter is the first charging area 625a . When the entry ramp 615 having the size greater than each of the partitioned charging areas 625 of the rotatable casing 620 is employed, a plurality of first charging areas 625a may be designated, thereby minimizing rotation of the rotatable casing 620.

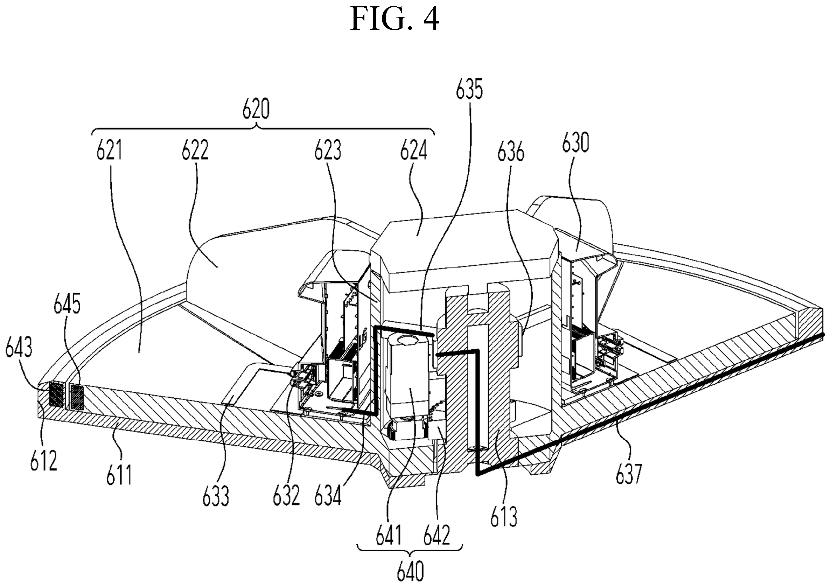

FIG. 4 is a cross-sectional view taken along a line A-A of FIG. 2. As illustrated in FIG. 4, the driver 640 is located at the center of each of the base casing 610 and the rotatable casing 620 so that the rotatable casing 620 may rotate while being disposed on the base casing 610. The base casing 610 and the rotatable casing 620 may respectively include cores 613 and 623 protruding from central portions thereof in order to provide connection structures for supplying power to the driver 640 and the charging box 630, respectively.

The base core 613 of the base casing 610 protrudes from the center of the base plate 611 and allows a power cable 637 that supplies power to pass through a small passage defined therein. The outer core 623 of the rotatable casing 620 may be spaced apart from the base core 613 by a predetermined distance while being positioned outwardly of the base core, and may have a polygonal column shape including an internal space.

The outer core 623 may have a polygonal column shape having a number of faces equal to the value obtained by dividing 360 degrees by the first angle, such that each of the faces is perpendicular to each of the charging areas 625 in a straight line. The present embodiment illustrates the outer core 623 having a hexagonal column shape with six faces.

The base core 613 is located inwardly of the outer core 623 and is not exposed to the outside. However, the outer core 623 is exposed to the outside and may further include a core cover 624 covering an upper portion of the outer core 623.

The core cover 624 covers the inner surface of the outer core 623 while being rotatably coupled to an upper portion of the base core 613, so that the rotatable casing 620 may stably rotate about the base core 613.

An indicator 626 displaying the charging state may be disposed on the charging box 630. However, when the robot 100 is positioned in front of the charging box 630 as illustrated in FIG. 1, the indicator 626 on the charging box is screened with the robot and invisible. Thus, the indicator 626 displaying the charging state may be disposed on the outer core 623 or the core cover 624. In the robot charging station 600 of the present embodiment, the indicator 626 is disposed on the core cover 624 as illustrated in FIG. 2.

A ring gear 642 located at an outer periphery of the base core 613 extend in a ring shape and has teeth formed thereon. A motor 641 is fixed to the rotatable casing 620, and a head gear of the motor 641 is engaged with the ring gear 642 to provide a rotational force to the ring gear 642. When the motor 641 rotates, the rotatable casing 620 may rotate relative to the base casing 610.

The driver 640 may be configured to rotate the rotatable casing 620 at a time by the first angle such that the charging box 630 is aligned in a straight line with the entry ramp 615. The robot charging station 600 of the present disclosure may include a rotation sensor 645 so as to be able to determine whether the rotation movement has stopped at a correct position.

The rotation sensor 645 may include an optical sensor or a switch. The optical sensor optically recognizes an identification mark located on the base casing 610, and the switch may be physically pressed to detect the identification mark. The rotation sensor 645 may include a Hall IC or the like that detects a fixed magnet 643 located in the base casing 610. Various types of rotation sensors 645 may be used, but the following description will be based on a Hall IC type rotation sensor 645 that detects the fixed magnet 643.

The fixed magnet 643 and the rotation sensor 645 may be disposed at positions spaced apart from the center of the robot charging station 600. As illustrated in FIG. 4, the fixed magnet 643 may be located in the base rim 612, and the rotation sensor 645 may be located in the rotatable casing 620. The farther the position thereof is from the center of rotation, the more finely the rotation angle may be detected.

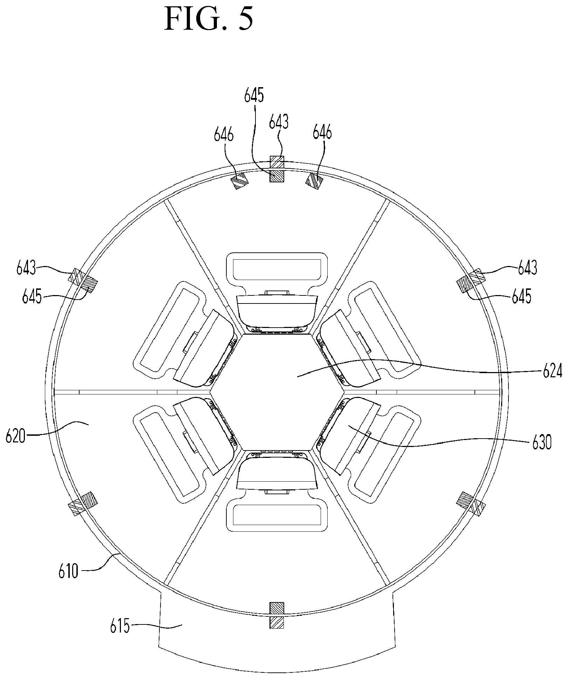

FIG. 5 is a plan view illustrating the robot charging station 600 according to an embodiment of the present disclosure, in which the fixed magnets 643 may be arranged to be spaced from each other by the first angle so as to be able to detect each rotation of the motor 641 at every first angle.

The rotation sensor 645 may be located in the rotatable casing 620 and may be positioned so as to face the fixed magnet 643. When the rotation sensor 645 approaches the fixed magnet 643, the rotation sensor detects a change in a magnetic force and may determine that the rotatable casing 620 has rotated by the first angle based on the detection result.

The number of rotation sensors 645 corresponding to the number of fixed magnets 643 may be respectively provided for the number of charging areas 625. However, even though only one rotation sensor is provided, when one of the plurality of fixed magnets 643 is detected by the rotation sensor, it may be recognized that the rotatable casing 620 has rotated by the first angle and that one of the plurality of charging areas 625 is connected to the entry ramp 615.

Since the rotatable casing 620 is rotatable in a bi-directional manner, direction sensors 646 may be respectively disposed on left and right sides of the rotation sensor 645 to recognize the direction of rotation. When the rotatable casing 620 starts rotating, one of the direction sensors 646 may detect the fixed magnet 643, and the rotation direction of the rotatable casing 620 may be detected based on the value of the direction sensor 646 that detected the fixed magnet 643.

For example, when the direction sensor 646 disposed clockwise relative to the rotation sensor 645 detects the fixed magnet 643, it may be recognized that the rotatable casing 620 is rotating in the counterclockwise direction. The controller may determine the charging area 625 located in a corresponding manner to the entry ramp 615 based on the values detected by the rotation sensor 645 and the direction sensor 646.

The controller may determine the charging level based on the magnitude of current in the charging box 630, and may rotate the rotatable casing 620 such that the first charging area 625a on which a robot on which the charging is complete or nearly complete is located is connected to the entry ramp 615.

A rotating magnet (not shown) that generates an attractive force with respect to the fixed magnet 643 upon each rotation by the first angle may further be included. The rotating magnet is provided at an outer periphery of the rotatable casing 620. Since the motor 641 is fixedly disposed at the center of the rotatable casing 620, the fixed magnet 643 and the rotating magnet may fix the position of the rotatable casing 620 while being disposed at positions spaced apart from the center of rotation. The motor 641 may apply a force greater than the attractive force between the fixed magnet 643 and the rotating magnet to rotate the rotatable casing 620.

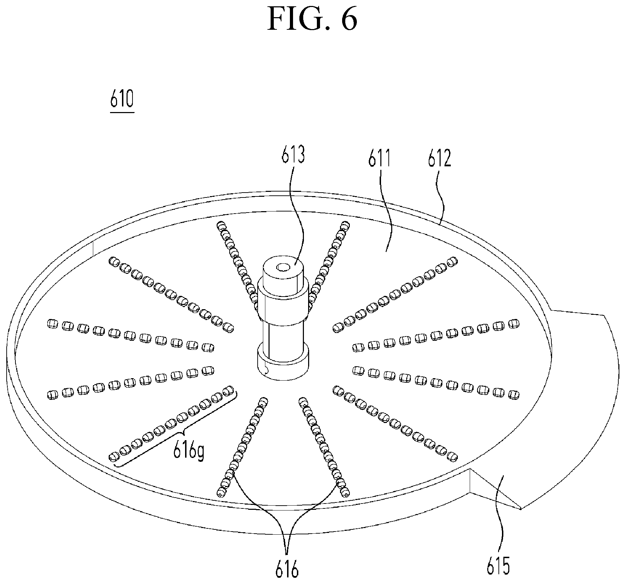

FIG. 6 is a perspective view illustrating the base casing 610 of the robot charging station 600 according to an embodiment of the present disclosure. The robot charging station may further include a bearing 616 positioned between the base plate 611 and the rotating plate 621 so that the rotatable casing 620 may stably rotate relative to the base casing 610.

In the present embodiment, the bearings 616 fixed on the base plate 611 include a row of a plurality of bearings 616 arranged in a radial direction of the base plate and a plurality of rows may be arranged to be spaced apart from each other by a predetermined angle. When the row of bearings 616 arranged in the radial direction is referred to as a bearing group 616g, a plurality of bearing groups 616g may be arranged so as to be spaced from each other in a circumferential direction by a predetermined angle.

The rows of the bearings 616 may be arranged to be spaced from each other by an equal spacing of an angle equal to or smaller than the first angle so as to be able to support the weight of the robot when the robot is seated on each charging area 625 of the rotating plate 621.

In the robot charging station 600 of the present embodiment including the six charging areas 625, the groups of the bearings 616 may be arranged to be spaced from each other by an equal spacing of 30 degrees as the half of the first angle of 60 degrees. In this case, two bearing groups 616g are located under one charging area 625, such that the weight of the robot may be stably supported thereon.

The robot charging station may include a connector ring 636 surrounding the periphery of the base core 613 so as to be able to stably contact and be connected to a power cable 637 located in the base core 613 even when the rotatable casing 620 rotates. An inner surface of the connector ring 636 may contact and be connected to the power cable 637 exposed from an outer surface of the base core 613.

Since the connector ring 636 has a cylindrical shape, at least a portion of the connector ring 636 may maintain a contacting and connected state with the cable 637 even when the connector ring 636 rotates. The connector ring 636 may be connected to a metal bridge 635 extending from the rotating core as illustrated in FIG. 4.

The metal bridge 635 may be connected to a charging cable 634 that is connected to the charging port 632 of the charging box 630. When the rotatable casing 620 rotates, the connector ring connected to the metal bridge 635 may rotate along the outer surface of the base core 613.

When connection at at least one portion of the inner surface of the connector ring 636 with the power cable is made, the connector ring may receive the power through the power cable 637. Thus, the power may pass through the metal bridge 635 connected to the connector ring 636. The metal bridges may be connected in parallel with the charging ports 632 of the charging boxes 630, thereby enabling simultaneous charging of the plurality of robots.

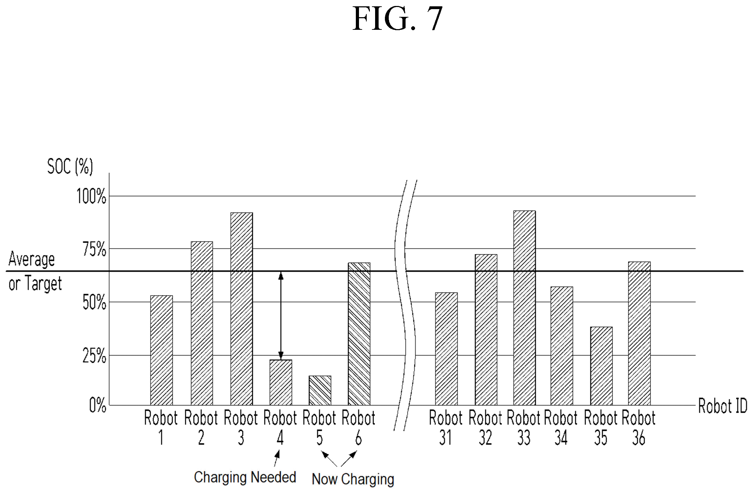

FIG. 7 is a graph illustrating an example of battery states of robots 100 chargeable by the robot charging station 600 of the present disclosure. The charging priority of robots 100 may be determined by setting an overall average value or a designated target value in consideration of the number of chargers 630 and charging time relative to the operating time of all robots 100. The charging management system may compare the remaining battery levels of all robots 100 with each other and designate the robot (Robot 4) having the remaining battery level having most distant from the average or target value as the priority charging target, and determine the charging order of the robots 100.

When there are many high priority charging targets, even before the robot (Robot 6) located in the robot charging station 600 is fully charged, if it is charged to a certain reference or greater (for example, the average value or 80%), the charging thereon may be stopped at the robot charging station 600 and the charging area may be yielded to the high priority charging target robot (Robot 4).

The robot charging station 600 of the present disclosure may be installed in the corner and reduces the space required for entry of the logistics robots 100 by consolidating the entry routes into the plurality of chargers into a single unified access path.

The spatial inefficiency associated with charging may be improved to eliminate the hurdle to introducing logistics robots 100 imposed by space constraints.

The above detailed description is not to be construed as limiting in any respect and should be considered exemplary. The scope of the disclosure is to be determined by a reasonable interpretation of the appended claims, and all changes within the equivalents of the disclosure are included in the scope of the disclosure.

## Claims

1. A robot charging station comprising:
a base casing fixed to a floor surface and including an entry ramp at an outer periphery;
a rotatable casing rotatably coupled to a top of the base casing and including a plurality of charging areas partitioned from each other, each area defining a first angle;
a plurality of charging boxes respectively installed on the plurality of charging areas of the rotatable casing; and
a driver for rotating the rotatable casing; and
a controller configured to control the driver such that a first charging area among the plurality of charging areas of the rotatable casing faces the entry ramp.

2. The robot charging station of claim 1, wherein the base casing includes a base core disposed at a center thereof and protruding upwardly,
wherein the driver comprises:
a ring gear formed along an outer periphery of the base core; and
a motor fixed to the rotatable casing and engaged with one side of the ring gear to provide a rotational force thereof.

3. The robot charging station of claim 1, wherein the base casing includes a base core disposed at a center thereof and protruding upwards,
wherein the rotatable casing includes an outer core surrounding an outer surface of the base core, and
wherein the charging boxes are arranged along the outer core such that each of charging boxes defines the first angle.

4. The robot charging station of claim 3, wherein the rotatable casing includes a plurality of partitions extending from the outer core and arranged to be spaced from each other by an angular spacing of the first angle, and
wherein each of the charging boxes is disposed between adjacent ones of the partitions.

5. The robot charging station of claim 3, comprising:
a power cable connected to the base core;
a connector ring in contact with the power cable and surrounding an outer periphery of the base core;
a metal bridge connecting the connector ring and the outer core; and
a charging cable connecting the metal bridge and the charging box to each other.

6. The robot charging station of claim 1, wherein the driver rotates the rotatable casing by an angle corresponding to an n-multiple of the first angle.

7. The robot charging station of claim 6, comprising:
a plurality of fixed magnets disposed in the base casing and arranged to be spaced from each other by an angular spacing of the first angle; and
a rotation sensor disposed in the rotatable casing to detect the fixed magnets,
wherein in response to that the rotation sensor detects the fixed magnet, the controller is configured to control the driver to stop rotation of the rotatable casing.

8. The robot charging station of claim 7, comprising:
a pair of direction sensors respectively located on left and right sides of the rotation sensor and configured to detect the fixed magnets,
wherein the controller is configured to determine a rotation direction of the rotatable casing based on the direction sensor that detected the fixed magnet among the pair of direction sensors.

9. The robot charging station of claim 7, wherein the rotation sensor includes a Hall IC or an optical sensor.

10. The robot charging station of claim 1, wherein the controller is configured to:
monitor a charging state of a robot connected to a charging port of the charging box, and
designate, as the first charging area, one of the charging areas on which a robot on which charging is nearly completed is located or one of empty charging areas.

11. The robot charging station of claim 1, wherein the entry ramp has a width corresponding to a width of an outermost edge of each of the partitioned charging areas of the rotatable casing.

12. The robot charging station of claim 1, wherein the entry ramp extends along an outer periphery of the base casing so as to have a width greater than a width of an outermost edge of each of the partitioned charging areas of the rotatable casing,
wherein the controller is configured to control the driver such that the first charging area is positioned at a position corresponding to a portion of the entry ramp that does not face a wall surface or an obstacle.

13. The robot charging station of claim 1, further comprising an indicator displaying a charging level of the robot.

14. The robot charging station of claim 1, comprising:
bearings positioned between an upper surface of the base casing and a lower surface of the rotatable casing,
wherein the bearings are arranged to be spaced apart from each other by an angular spacing of a second angle as 1/2 of the first angle.

15. The robot charging station of claim 1, comprising: a seating groove located in front of each of the charging boxes of the rotatable casing, wherein a wheel of the robot is caught in the seating groove.
